# EUROPEAN PATENT SPECIFICATION

(11) **EP 2 212 991 B1**
(45) Date of publication and mention of the grant of the patent: **20.07.2022**
(21) Application number: 08852065.5
(22) Date of filing: 24.09.2008
(51) Int. Cl.: H02P 21/18, H02P 21/06, D06F 37/30, D06F 34/08, D06F 103/24, D06F 105/48

(54) **Motor performing vector control in a start mode**
Motor mit Vektorregelung im Startmodus
Moteur effectuant une commande vectorielle dans un mode de démarrage

(30) Priority: 22.11.2007 KR 20070119629
(43) Date of publication of application: 04.08.2010
(73) Proprietor: LG Electronics Inc., Seoul 150-721 (KR)
(72) Inventor: JUN, Cha-Seung, Seoul 153-802 (KR); MIN, Byoung-Wook, Seoul 153-802 (KR); LEE, Dong-Cheol, Seoul 153-802 (KR); LEE, Jae-Chul, Seoul 153-802 (KR)
(74) Representative: Vossius & Partner Patentanwälte Rechtsanwälte mbB
(86) International application number: PCT/KR2008/005678
(87) International publication number: WO 2009/066865

(56) References cited:
- EP-A2- 1 320 187
- KR-A- 20060 075 705
- KR-B1- 0 122 861
- KR-B1- 0 136 116
- KR-B1- 940 006 963
- US-A1- 2003 034 755

## Description

### BACKGROUND

The present disclosure relates to a motor.

A motor is a device generating rotational motion of a rotor using external power. The motors are widely used for washers, compressors, and the like. The present disclosure closely relates to the motor for the washer but not limited to this. Meanwhile, there are a variety of different types of washers, among which a drum type washer has a drum that is horizontally disposed and in which the laundry is loaded. A washer motor is mounted behind the drum to rotate the drum. A blushless direct current (BLDC) motor is mainly used as the washer motor that can rotate at a high speed and reduce noise.

A current application method of the washer motor can be classified, when one cycle is 360° into a 120° current application method in which a power non-application region where electric power is not applied within a 120° range of an electrical angle to each of a U-phase, V-phase, and W-phase of a three-phase power source and a 180° current application method in which no power non-application region is formed but a current application direction to each phase is altered at every 180°. For the 120° current application method, the motor can be driven with a general position of the rotor. Therefore, the 120°current application method can be usually utilized for the start of the washer motor. However, the 120° current application method generates an overcurrent to make the system unstable. In addition, due to a torque ripple caused by a harmonic wave component contained in a current wave, a relative large amount of noise and vibration is generated. Meanwhile, for the 180°current application method, since the power is stably applied, the noise is relatively small and the system can stably operate. However, when the position of the rotor is inaccurately measured, the power is inaccurately applied and thus the motor may stop or the noise increases. Therefore, the 180° current application method may be applied in an operation mode where the rotor rotates at a speed higher than a predetermined level.

Under this background, the washer motor is driven by the 120° current application method during the start of the washer even through the noise is relatively high and the system is unstable and by the 180° current application method during the operation mode where the noise is relative small and the system is stable. However, since the washer is generally used at home, the noise/vibration problem and the system unstable problem that occur in the 120° current application method more significantly come out. These problems become more significant in washing and rinsing cycles where the motor repeatedly rotates forward and reverse directions. This causes user complaints.

EP 1 320 187 A2 discloses a method and system for controlling a permanent magnet machine, comprising a stator with a plurality of coils, a rotor having a plurality of permanent magnets and a motor controller controlling the speed of the rotor using extrapolation for determining rotor angle position between hall sensor state transitions.

### SUMMARY

Embodiments provide a motor that can rotate a drum with low noise and low vibration using a 180° current application method even in a start mode.

Embodiments also provide a motor that can further reduce noise and vibration and prevent generation of an overcurrent by more property controlling power applied thereto using a vector control method as a power application method in a 180° current application method.

In one embodiment, a motor as defined by claim 1 includes: a stator on which a plurality of coils are wound and disposed in a circular shape; a rotor having a plurality of permanent magnets spaced apart from the coils by a predetermined distance; and a motor controller performing a vector control method for controlling a current vector applied on a d-q axis rotating coordinate system in a start mode of the rotor to make a current speed of the rotor follow a reference speed of the rotor by comparing the current speed with the reference speed, the motor controller including a speed/position detector for detecting the current speed and an current position of the rotor using an on/off signal of a hall sensor installed on the stator.

The speed/position detector assumes a position of the rotor even in the start mode of the rotor. The speed/position detector assumes a position of the rotor using a continuous value without a discontinuity point. At this point, the position of the rotor may be assumed with a sine curve by the speed/position detector.

The position of the rotor is repeatedly assumed with a cycle of an electrical angle of 360° by the speed/position detector. The number of hall sensors is two to generate at least one on/off signal at every electrical angle of 90°.

The motor controller may include: a speed controller for generating a d-axis reference current Id* and a q-axis reference current Iq* by adjusting current components Id and Iq of a d-q axis rotating coordinate system defined by a q-axis that is perpendicular to a magnetic flux direction of the permanent magnets and a d-axis that is in parallel with the magnetic flux direction of the permanent magnets; a current controller for generating a d-axis reference voltage Vd* and a q-axis reference voltage Vq* based on the d-axis reference current Id* and the q-axis reference current Iq*; and a coordinate converter for converting a d-q axis rotating coordinate and an uvw stationary coordinate into each other using information on the position of the rotor, which is continuously assumed by the speed/position detector. At this point, the speed controller may generate a reference current on the d-q axis rotating coordinate system by receiving the current speed of the rotor, which is measured by the speed/position detector and comparing the current speed with the reference speed. In addition, the motor may further include: a pulse width modulation (PWM) calculator for generating a PWM signal based on the reference voltages Vd* and Vq* output from the current controller; and an inverter for controlling a current applied to the coils using a signal generated by the PWM calculator.

The details of one or more embodiments are set forth in the accompanying drawings and the description below. Other features will be apparent from the description and drawings, and from the claims.

### BRIEF DESCRIPTION OF THE DRAWINGS

Fig. 1 is a cross-sectional view of a washer according to an embodiment.
Fig. 2 is a block diagram illustrating an apparatus for controlling a motor for a washer according to an embodiment.
Fig. 3 is a flowchart illustrating a method for controlling a motor for a washer according to an embodiment.
Fig. 4 is a graph illustrating a position assuming process of a rotor.

### DETAILED DESCRIPTION OF THE EMBODIMENTS

Reference will now be made in detail to the embodiments of the present disclosure, examples of which are illustrated in the accompanying drawings.

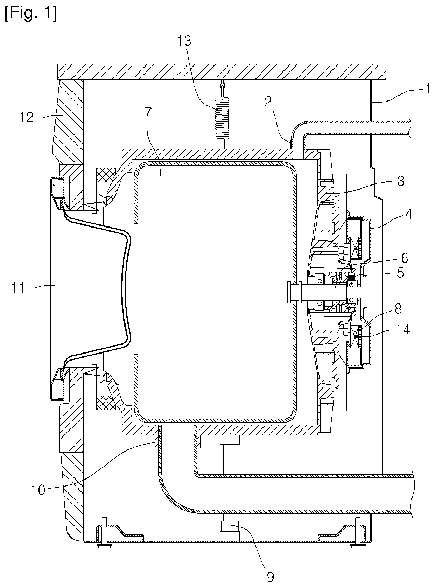

Fig. 1 is a cross-sectional view of a washer according to an embodiment.

Referring to Fig. 1, a drum type washer includes a cabinet 1 defining an exterior of the washer and functioning as an installing/supporting base for components, a drum 7 installed in the cabinet 1 and performing washing of laundry loaded therein through a rotational motion, a tub 3 installed at an outside of the drum 7 and storing washing water, a stator 8 fixed on a rear surface of the tub 3, a rotor disposed on an outer circumference of the stator 8 and rotating by electromagnetic force generated between the stator 8 and the rotor 3, a shaft 6 functioning as a central axis of the rotor 4 and rotating together with the rotor 4.

The stator 8, rotator 4 and shaft 6 may be constituent elements of a motor. The stator 8 is provided with a plurality of teeth around which coils are wound and magnets are installed on the rotor 4. The rotor rotates by the electromagnetic force generated between the coils and the magnets. Generally, the rotation of the motor means that the rotor 4 rotates by the electromagnetic force generated between the rotor and the stator.

The operation of the drum type washer will be described in time series hereinafter.

A user opens a door 11 and loads the laundry in the drum 7. Subsequently, the user sets an operational mode considering a state of the laundry and a desired operational condition through a manipulation panel 12. When the washer starts operating, the motor starts rotating and an amount of the laundry is detected in accordance with the load of the motor. Next, a washing cycle is performed in response to the amount of the laundry.

When the washing cycle starts, washing water is introduced through a washing water inlet 2 and the motor rotates to rotate the drum 7. Here, the drum 7 rotates in forward and reverse directions alternately to prevent the laundry from getting tangled and increase the washing efficiency of the drum type washer having relatively lower washing force compared with other types of washers. Meanwhile, in order to alternately rotate the drum 7 in the forward and reverse directions, after the drum rotates in the forward direction, the drum stops rotating, and subsequently the drum rotates in the reverse direction.

However, according to a driving method of a related art washer, a relatively large amount of noise and vibration is generated in the start mode of the motor. That is, since the motor is driven by the 120° current application method, the motor generates itself a large amount of noise during operation. In addition, if the control is not properly performed in response to the movement and situation of the laundry due to a system problem of the motor and Etc., a large amount of vibration is generated. This vibration may be transferred to the tub via a bearing 5 or may be directly transferred to the drum by the shaft 6. In addition, the vibration transferred to the drum is transferred to the tub 3 and absorbed by a damper 9 or a spring 13.

However, contacting impact between these components may cause the noise.

In order to solve the above-described limitations, in this embodiment, a 180° current application method is applied as a power application method for applying power to the motor in the start mode of the washer and a vector control method is used as a power control method for controlling the power applied to the motor.

The vector control method is a kind of the power application control method for controlling a current applied to the coils. Describing the vector control method, a d-q axis rotating coordinate system that is defined by a d-axis that is in parallel with a magnetic flux direction of the permanent magnets disposed on the rotor and a q-axis that is perpendicular to the magnetic flux direction of the permanent magnets is set to control the current such that the current can be applied in a direction in parallel with the d-axis and the q-axis. The vector control method has an advantage of more accurately controlling the current applied to the motor and enabling a flux weakening control of the motor, thereby increasing a motor speed to a level that is higher than a rated speed of the motor. Therefore, for a motor of a washer that requires a high speed such as a spinning (dewatering) cycle, a size and specification of the motor can be reduced while a speed for performing the spinning cycle is attained.

In addition, according to a feature of the embodiment, in a washing cycle where the forward and reverse directions are repeatedly performed many times, the power can be applied to the coils of the stator by the vector control method even in the start operation to a direction. In this case, the motor and washer can operate with low noise/low vibration. The vector control method will be described in more detail later.

When the washing of the laundry is finished through the above-described process, the washing water is drained through a washing water outlet 10 and the washing cycle is finished. Subsequently, the rinsing and spinning cycles are performed. Here, the rinsing cycle is similar to the washing cycle. That is, in the rinsing cycle, the drum rotates in the forward and reverse directions alternately so that the laundry is washed.

Meanwhile, the spinning cycle is for removing water from the laundry. In the spinning cycle, the drum must spin at a high speed. To realize this, the motor operates with a flux weakening mode.

In the flux weakening mode, an amount of the current applicable to the motor is reduced by counter electromotive force after the motor reaches a rated speed, so as to solve a limitation where the speed of the motor cannot increase even when the current is applied. That is, the flux weakening mode is a mode for forcedly weakening the magnetic flux. In more detail, the flux weakening mode is a mode where, the flux is weakened by increasing an amount of the current applied in the d-axis that is in parallel with the magnetic flux direction of the permanent magnets in the d-q axis rotating coordinate system used in the vector control method after the motor reaches the rated speed. By this, the motor can be driven with a speed higher than the rated speed although the operating efficiency of the motor is deteriorated.

Since the drum rotates at a speed higher than the rated speed of the motor by the flux weakening mode, the drum type washer can use a motor having a capacity less than a required standard.

As can be understood from the above description, the control of the motor can be more stably performed by operating the motor using the vector control method in the start mode.

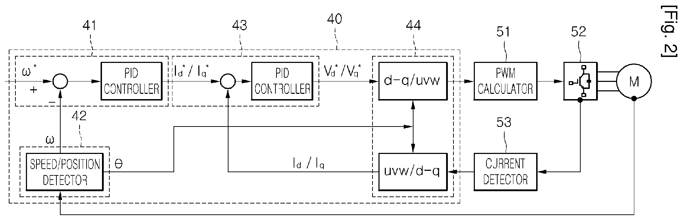

Fig. 2 is a block diagram illustrating an apparatus for controlling a washer motor according to an embodiment. An apparatus of this embodiment is for driving the washer motor of Fig. 1. The apparatus may be defined by a plurality of components such as control chips installed on a board mounted in the washer.

Referring to Fig. 2, there are provided a motor controller 40 controlling power input to the motor M, a PWM calculator 51 that receives a signal of a uvw stationary coordinate system from the motor controller 40 to generate a PWM signal, an inverter 52 that receives the PWM signal to directly control the power input to the motor M, and a current detector 53 for detecting an existing current Id of the d-axis and an existing current Iq of the q-axis from the inverter 52.

In more detail, the motor controller 40 includes a speed/position detector 42 for detecting a speed and position of the motor M, a speed controller 41 for generating a reference current Id* of the d-axis and a reference current Iq* of the q-axis by adjusting current components Id and Iq on the d-q axis rotating coordinate system defined by the q-axis that is perpendicular to the magnetic flux direction of the permanent magnets and the d-axis that is in parallel with the magnetic flux direction of the permanent magnets so that, by comparing a current speed ω of the rotor detected by the speed/position detector 42 with a reference speed ω*, the current speed ωfollows the reference speed ω*, a current controller 43 for generating a reference voltage Vd* of the d-axis and a reference voltage Vq* of the q-axis by PIDcontrolling the existing currents Id and Iq based on the reference current Id* of the d-axis and the reference current Iq* of the q-axis that are output from the speed controller 41, and a coordinate converter 44 for converting the d-q axis rotating coordinate system and the uvw stationary coordinate system into each other. The coordinate converter 44 converts the uvw stationary coordinate system and the d-q axis rotating coordinate system to each other with reference to the position information of the rotor output from the speed/position detector.

Here, the speed/position detector 42 detects the speed and position of the rotor using one or more hall sensors mounted on the motor M, i.e., the stator 8. Two hall sensors 14 may be installed to detect a position state at every electrical angle of 90°. However, the present disclosure is not limited to this. For example, three hall sensors may be installed to more accurately detect the position of the rotor.

The following will describe a method of controlling the motor for the washer with reference to the apparatus of Fig. 2.

In a start mode where the stopped motor starts rotating, the rotor is forcedly aligned with a predetermined position. At this point, a pulse is applied for a predetermined time to the d-axis that is in parallel with the permanent magnets in the d-q axis rotating coordinate system so that the motor can be aligned with a position (that may be preset in accordance with a relative relationship between the permanent magnets and the coils) corresponding to the permanent magnets.

After the above, a current is applied to the motor so that the motor starts rotating at the preset position (which may be a motor control information and stored as a forced aligned position). Meanwhile, after the rotor rotates by an electrical angle of 90°at the forced aligned position, the passing of the permanent magnet is detected by one of the hall sensors 14. Subsequently, when the rotor further rotates by the electrical angle of 90°the passing of the permanent magnet is detected by another one of the hall sensors 14. As described above, it can be understood that the hall sensors are located such that a predetermined detecting signal is generated at every 90°rotation of the rotor.

Meanwhile, according to a feature of this embodiment, the speed/position detector 42 continuously assumes the position and speed of the rotor 4 using the detecting signal of the hall sensors 14 in the start mode. That is, when two hall sensors 14 are provided, the speed/position detector 42 performs a function generating a predetermined signal at every 90°rotation of the rotor. In this case, the speed and position of the rotor are assumed by the speed/position detector 24 at a region between positions at the electrical angles of 90°. In this case, the speed and position of the rotor can be continuously assumed without any discontinuity points.

According to this embodiment, since the vector control method is applied even in the start mode, the continuous assumption of the speed and position of the rotor becomes possible. In more detail, the vector control method applies the power to the motor M using the d-q axis rotating coordinate system. At this point, if any discontinuity points are generated at the assumed position/speed of the rotor (actually the position of the rotor may more affect on the generation of the discontinuity points), the current applied to the d-axis that is in parallel with the permanent magnet and the q-axis that is perpendicular to the permanent magnet abruptly changes at a related position (i.e., a detecting position of the hall sensor). In this case, noise is generated and sometimes inverse torque is generated in the rotor to stop the rotor.

Needless to say, the inverse torque may be generated when the rotor rotates at a high speed. In this case, since the inertia of the rotor is relatively large, the inverse torque does not substantially affect on the rotation of the rotor.

Taking into account the above-described limitations, this embodiment continuously assumes the speed θ and position ω of the rotor to use these continuous assumption values. Here, "continuous" means that there is only one value at one time zone. According to the invention, the continuous assumed values have a continuous curve of a sine function.

The existing speed ω of the rotor detected by the continuous assumption by the speed/position detector 42 is input to the speed controller 41 and is PID-controlled together with the reference speed ω*. Further, the speed controller 41 outputs the d-axis reference current Id* and q-axis reference current Iq* of the d-q rotating coordinate system. The output reference currents Id* and Iq* are input to the current controller 43 and compared with the existing currents Id and Iq of the inverter 52 defined by the d-q rotating coordinate system which are detected by the current detector 53 and converted by the coordinate converter 44, thereby performing the proportional integral derivative (PID) control. The current controller 43 outputs the reference voltages Vd* and Vq* on the d-q rotating coordinate system.

The reference voltages output from the current controller 43 are converted into the reference voltages on the uvw stationary coordinate system by the coordinate converter 44 and are input to the PWM calculator 51. The PWN calculator 51 generates the PWM signal corresponding to the reference voltage and inputs the PWM signal to the inverter 52. Six transistors provided by the inverter 52 turn on/off the power to drive the motor.

As described above, the method for controlling the motor for the washer in accordance with this embodiment uses the vector control method in not only the operation mode at which the motor rotates at a speed higher than a predetermined level but also the start mode at which the motor starts rotating.

By applying the vector control method in the start mode, the noise can be reduced in the start mode. This is more effective when the start mode is performed many times as the rotational direction of the drum in, for example, the washing cycle is altered many times. That is, in the washing cycle, the forward and inverse rotations are repeatedly performed and thus a large amount of noise is generated. This limitation can be significantly improved by applying the vector control method to the start mode.

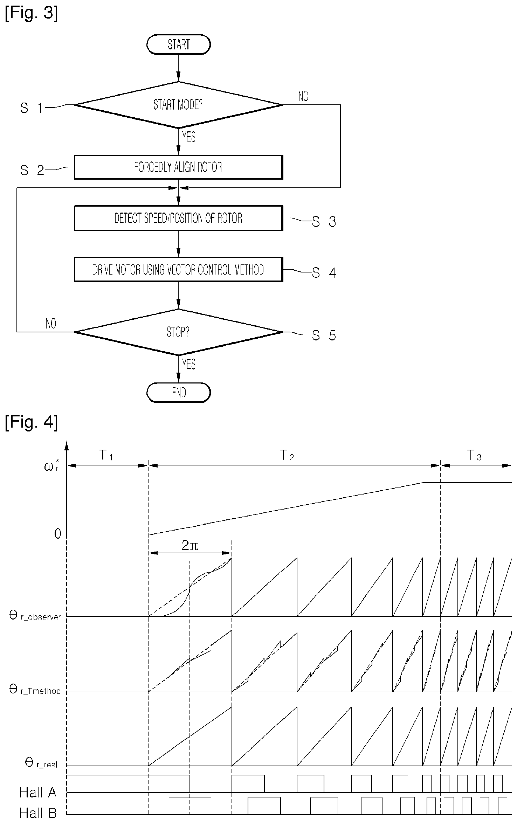

Fig. 3 is a flowchart illustrating the method for controlling the motor. The above-described method for controlling the motor for the washer will be described with reference to Fig. 3.

Referring to Fig. 3, it is first determined if it is a start mode where the motor starts rotating (S1). When it is determined that it is the start mode, the rotor is forcedly aligned (S2). When it is determined that it is not the start mode, the speed/position of the rotor is detected (S3).

In the forcedly aligning operation S2, the rotor can be aligned with a specific position related to the permanent magnets by applying a plurality of pulses (e.g., five pulses) that are applied at an approximately 5-second interval in a direction in parallel with the d-axis on the d-q coordinate system. Even after the rotor is aligned, the speed/position detecting operation S3 is performed.

In the speed/position detecting operation S3, the current position and speed of the rotor are assumed in accordance with the signals of the hall sensor, which are generated at every electrical angle of 90°.

According to the invention, the position of the rotor is continuously assumed while converting at least one coefficient (that may be altered by an on/off signal of the hall sensor) acting as a factor of the sine function having a factor that is time.

The following will describe a position assumption process of the rotor with reference to a signal diagram.

Fig. 4 is a graph illustrating a position assumption process of the rotor.

Referring to Fig. 4, an on/off signal of at least one of the hall sensors Hall A and Hall B is altered at every electrical angle of 90°as time passes. As the on/off signal of the hall sensor is altered, a real position θr-real of the rotor rotates while linearly increasing along an angle of 360°.

The following will describe a method for assuming the real position θr-real of the rotor using the alternation of the on/off signal of the hall sensor 14.

In a method (T-method) for newly setting an assumption position of the rotor as a real position of the rotor at each point where the on/off signal of the hall sensor is altered, it can be noted that three discontinuity points are generated within a 360°range that is a one cycle of an electrical angle for an assumption position θr-Tmethod of the rotor. This method is used in the related art where discontinuity points are generated in each cycle and thus the motor cannot be driven in the start mode by the application of the vector control method.

In order to improve the above limitations, in this embodiment, the speed/position detector 42 operates to provide a continuous assumption value during the 360°cycle while using an on/off signal of the hall sensor as a factor. The method for continuously assuming the speed/position by the speed/position detector 42 is already described above. In this case, as shown in the drawing, the assumption position θrobserver is provided in the form of a continuous sine function not having the discontinuity point. Further, the speed/position is repeated assumed at every cycle of 360°.

Meanwhile, the reference speed ωr* shows that the rotor does not rotate during the forcedly aligning time T1 but aligned relative to the stator. In the start mode of the motor T2, the speed of the rotor slowly increases. In the normal mode T3 of the motor, the motor rotates at the normal speed. In this embodiment, it can be noted that the position of the rotor is continuously assumed in the start mode T2 so as to apply the vector control method even in the start mode T2 of the motor.

Referring again to Fig. 3, in the speed/position detecting operation S3, after the speed/position of the rotor is detected by the method for assuming the speed/position of the rotor, the rotor rotates in accordance with the vector control method using the detected information (S4).

After the above, it is determined if a signal for stopping the rotor is generated (S5). When it is determined that the signal for stopping the rotor is generated, the rotor stops rotating. When it is determined that the signal for stopping the rotor is not generated, the process is returned to the speed/position detecting operation S3.

It should be noted that the hall sensors are used to more accurately control the motor as the feature of the present disclosure is that the vector control method is applied in the start mode of the motor.

Further, although it is described in the above-described embodiments that, in the speed/position detecting operation of the rotor, the method for assuming the speed/position is identically applied to the start mode and normal mode of the motor and thus the speed/position is assumed by the hall sensors in the identical method. However, the present disclosure is not limited to this. Although it is required that the position and speed of the rotor are assumed with a continuous value in the start mode of the motor, even when the related art method where the rotor is newly set to the current position of the rotor at the position where the on/off signal of the hall sensor is generated is applied, the same result can be attained. This is because that there is no difficulty in smoothly rotating the rotor by the rotational inertia of the rotor even when there is a discontinuity point in the normal mode of the motor.

According to the embodiments, as the 180° current application method is used in the start mode of the washer, the washer can operate with low noise/low vibration. Furthermore, the vector control method is used as a power application method in the 180° current application method in the start mode of the motor, the power applied to the motor can be more properly controlled and thus the noise/vibration can be further reduced and the generation of the overcurrent can be prevented.

In addition, in the washing cycle where the forward and reverse rotations are repeatedly performed and thus a large amount of noise is generated, the nose can be significantly reduced in the start mode for converting the rotational direction. Therefore, the user's satisfaction can be further enhanced.

## Claims

1. A motor (M) comprising:
a stator (8) on which a plurality of coils are wound and disposed in a circular shape;
a rotor (4) having a plurality of permanent magnets spaced apart from the coils by a predetermined distance; and
a motor controller (40) performing a vector control method for controlling a current vector applied on a d-q axis rotating coordinate system in a start mode of the rotor to make a current speed (ω) of the rotor follow a reference speed (ωr*) of the rotor by comparing the current speed (ω) with the reference speed (ωr*),
**characterized by** two hall sensors (14) installed on the stator, the hall sensors (14) being configured to generate a signal at every 90° electrical angle of the rotor (4),
the motor controller (40) comprises a speed/position detector (42) for detecting the current speed (ω) and a current position of the rotor(4)
wherein the speed/position detector (42) assumes a position of the rotor (4) by converting at least one coefficient that is altered by an on/off signal of the hall sensors (14), acting as a factor of a sine function having a factor that is time, to allow the assumed position of the rotor (4) to have continuous value without a discontinuity point,
wherein the position of the rotor is repeatedly assumed with a cycle of an electrical angle of 360°.

2. The motor according to claim 1, wherein the speed/position detector (42) assumes a position of the rotor (4) in the start mode of the rotor (4).

3. The motor according to any one of the preceding claims, wherein the position of the rotor (4) is assumed with a sine curve by the speed/position detector (42).

4. The motor according to any one of the preceding claims, wherein the motor controller (40) comprises:
a speed controller (41) for generating a d-axis reference current Id* and a q-axis reference current Iq* by adjusting current components Id and Iq of a d-q axis rotating coordinate system defined by a q-axis that is perpendicular to a magnetic flux direction of the permanent magnets and a d-axis that is in parallel with the magnetic flux direction of the permanent magnets;
a current controller (43) for generating a d-axis reference voltage Vd* and a q-axis reference voltage Vq* based on the d-axis reference current Id* and the q-axis reference current Iq*; and
a coordinate converter (44) for converting a d-q axis rotating coordinate and an uvw stationary coordinate into each other using information on the position of the rotor (4), which is continuously assumed by the speed/position detector (40).

5. The motor according to claim 4, wherein the speed controller (41) generates a reference current on the d-q axis rotating coordinate system by receiving the current speed of the rotor (4), which is measured by the speed/position detector (42) and comparing the current speed with the reference speed.

6. The motor according to claim 4, further comprising:
a PWM calculator for generating a PWM signal based on the reference
voltages Vd* and Vq* output from the current controller (43); and
an inverter for controlling a current applied to the coils using a signal generated by the PWM calculator.

## Patentansprüche

1. Motor (M), der aufweist:
einen Stator (8), auf den mehrere Spulen gewickelt sind und in einer kreisförmigen Form angeordnet sind;
einen Rotor (4) mit mehreren Permanentmagneten, die von den Spulen um einen vorgegebenen Abstand beabstandet sind; und
eine Motorsteuerung (40), die in einem Startmodus des Rotors ein Vektorsteuerverfahren zum Steuern eines Stromvektors durchführt, der auf ein rotierendes d-q-Achsen-Koordinatensystem angewendet wird, um eine aktuelle Geschwindigkeit (ω) des Rotors einer Referenzgeschwindigkeit (ωr^{∗}) des Rotors folgen zu lassen, indem die aktuelle Geschwindigkeit (ω) mit der Referenzgeschwindigkeit (ωr*) verglichen wird,
**gekennzeichnet durch** zwei Hall-Sensoren (14), die auf dem Stator installiert sind, wobei die Hall-Sensoren (14) konfiguriert sind, um in jedem elektrischen 90°-Winkel des Rotors (4) ein Signal zu erzeugen,
wobei die Motorsteuerung (40) einen Geschwindigkeits-/Positionsdetektor (42) aufweist, um die aktuelle Geschwindigkeit (ω) und eine aktuelle Position des Rotors (4) zu detektieren,
wobei der Geschwindigkeits-/Positionsdetektor (42) eine Position des Rotors (4) annimmt, indem er wenigstens einen Koeffizienten umwandelt, der durch ein Ein-/Aussignal der Hall-Sensoren (14) verändert wird, der als ein Faktor einer Sinusfunktion mit einem Faktor, der die Zeit ist, wirkt, um zu ermöglichen, dass die angenommene Position des Rotors (4) einen stetigen Wert ohne einen Unstetigkeitspunkt hat,
wobei die Position des Rotors mit einem Zyklus eines elektrischen Winkels von 360° wiederholt angenommen wird.

2. Motor nach Anspruch 1, wobei der Geschwindigkeits-/Positionsdetektor (42) eine Position des Rotors (4) in dem Startmodus des Rotors (4) annimmt.

3. Motor nach einem der vorhergehenden Ansprüche, wobei die Position des Rotors (4) durch den Geschwindigkeits-/Positionsdetektor (42) mit einer Sinuskurve angenommen wird.

4. Motor nach einem der vorhergehenden Ansprüche, wobei die Motorsteuerung (40) aufweist:
eine Geschwindigkeitssteuerung (41) zum Erzeugen eines d-Achsen-Referenzstroms Id^{∗} und eines q-Achsen-Referenzstroms Iq^{∗} durch Einstellen von Stromkomponenten Id und Iq eines rotierenden d-q-Achsen-Koordinatensystems, das durch eine q-Achse, die senkrecht zu einer Magnetflussrichtung der Permanentmagnete ist, und eine d-Achse, die parallel zu der Magnetflussrichtung der Permanentmagnete ist, definiert wird;
eine Stromsteuerung (43) zum Erzeugen einer d-Achsen-Referenzspannung Vd^{∗} und einer q-Achsen-Referenzspannung Vq^{∗} basierend auf dem d-Achsen-Referenzstrom Id^{∗} und dem q-Achsen-Referenzstrom Iq^{∗}; und
einen Koordinatenwandler (44) zum Ineinander-Umwandeln einer rotierenden d-q-Achsen-Koordinate und einer ortsfesten uvw-Koordinate unter Verwendung von Informationen über die Position des Rotors (4), die von dem Geschwindigkeits-/Positionsdetektor (42) stetig angenommen wird.

5. Motor nach Anspruch 4, wobei die Geschwindigkeitssteuerung (41) einen Referenzstrom in dem rotierenden d-q-Achsen-Koordinatensystem erzeugt, indem sie die aktuelle Geschwindigkeit des Rotors (4), die von dem Geschwindigkeits-/Positionsdetektor (42) gemessen wird, empfängt und die aktuelle Geschwindigkeit mit der Referenzgeschwindigkeit vergleicht.

6. Motor nach Anspruch 4, der ferner aufweist:
einen PWM-Rechner zum Erzeugen eines PWM-Signals basierend auf den von der Stromsteuerung (43) ausgegebenen Referenzspannungen Vd^{∗} und Vq^{∗}; und
einen Inverter zum Steuern eines an die Spulen angelegten Stroms unter Verwendung eines durch den PWM-Rechner erzeugten Signals.

## Revendications

1. Moteur (M) comprenant :
un stator (8) sur lequel une pluralité de bobines sont enroulées et disposées selon une forme circulaire ;
un rotor (4) ayant une pluralité d'aimants permanents espacés des bobines d'une distance prédéterminée ; et
un dispositif de commande de moteur (40) réalisant un procédé de commande vectorielle pour la commande d'un vecteur actuel appliqué sur un système de coordonnées de rotation d'axes d-q dans un mode de démarrage du rotor pour amener une vitesse actuelle (ω) du rotor à suivre une vitesse de référence (ωr*) du rotor par la comparaison de la vitesse actuelle (ω) avec la vitesse de référence (ωr^{∗}),
**caractérisé par** deux capteurs à effet Hall (14) installés sur le stator, les capteurs à effet Hall (14) étant configurés pour générer un signal à chaque angle électrique de 90° du rotor (4),
le dispositif de commande de moteur (40) comprend un détecteur de vitesse/de position (42) pour détecter la vitesse actuelle (ω) et une position actuelle du rotor (4),
dans lequel le détecteur de vitesse/de position (42) estime une position du rotor (4) par la conversion d'au moins un coefficient qui est modifié par un signal d'activation/de désactivation des capteurs à effet Hall (14), agissant comme un facteur d'une fonction sinusoïdale ayant un facteur qui est le temps, pour permettre à la position estimée du rotor (4) de posséder une valeur continue sans point de discontinuité,
dans lequel la position du rotor est estimée de manière répétée avec un cycle d'un angle électrique de 360°.

2. Moteur selon la revendication 1, dans lequel le détecteur de vitesse/de position (42) estime une position du rotor (4) dans le mode de démarrage du rotor (4).

3. Moteur selon l'une quelconque des revendications précédentes, dans lequel la position du rotor (4) est estimée avec une courbe sinusoïdale par le détecteur de vitesse/de position (42).

4. Moteur selon l'une quelconque des revendications précédentes, dans lequel le dispositif de commande de moteur (40) comprend :
un dispositif de commande de vitesse (41) pour la génération d'un courant Id^{∗} de référence d'axe d et d'un courant Iq^{∗} de référence d'axe q par l'ajustement des composantes de courant Id et Iq d'un système de coordonnées de rotation d'axes d-q défini par un axe q qui est perpendiculaire à une direction de flux magnétique des aimants permanents et un axe d qui est parallèle à la direction de flux magnétique des aimants permanents ;
un dispositif de commande de courant (43) pour la génération d'une tension Vd^{∗} de référence d'axe d et d'une tension Vq^{∗} de référence d'axe q sur la base du courant Id^{∗} de référence d'axe d et du courant Iq^{∗} de référence d'axe q ; et
un convertisseur de coordonnées (44) pour la conversion d'une coordonnée de rotation d'axes d-q et d'une coordonnée stationnaire uvw l'une vers l'autre à l'aide d'informations sur la position du rotor (4), qui est estimée en continu par le détecteur de vitesse/de position (40).

5. Moteur selon la revendication 4, dans lequel le dispositif de commande de vitesse (41) génère un courant de référence sur le système de coordonnées de rotation d'axes d-q par la réception de la vitesse actuelle du rotor (4), qui est mesurée par le détecteur de vitesse/de position (42), et la comparaison de la vitesse actuelle avec la vitesse de référence.

6. Moteur selon la revendication 4, comprenant en outre :
un calculateur à modulation d'impulsions en durée, PWM, pour la génération d'un signal à PWM sur la base des tensions de référence Vd^{∗} et Vq^{∗} délivrées en sortie du dispositif de commande de courant (43) ; et
un onduleur pour commander un courant appliqué aux bobines à l'aide d'un signal généré par le calculateur à PWM.
